# EUROPEAN PATENT APPLICATION

(11) **EP 3 270 579 A1**
(43) Date of publication of application: **17.01.2018**
(21) Application number: 17177863.2
(22) Date of filing: 26.06.2017
(51) Int. Cl.: H04N 1/00, H04N 1/10

(54) **HIGHLY ADAPTABLE SCANNER PLATEN CUSHION FOR IMPROVING DOCUMENT CONTACT WITH PLATEN GLASS**

(30) Priority: 13.07.2016 US 201615209254
(71) Applicant: Xerox Corporation, Rochester, NY 14644 (US)
(72) Inventor: GOLDING, Paul, Hertford SG13 (GB); DE ECHANIZ, Sebastian Rodrigo, Milton Keynes MK10 9BH (GB); WILSHER, Michael John, Letchworth Herts SG6 2HJ (GB); THURNELL, Benjamin T., Hertfordshire SG2 0QP (GB); WYNN, Leslie, Hertfordshire SG6 4EZ (GB)
(74) Representative: Gill Jennings & Every LLP

(57) **Abstract**

A platen cushion apparatus includes a platen cushion configured to conform to both a document and a platen of a scanner so as to maintain the document against the platen independent of a scanner to document handler alignment, while also maximizing contact with the document and spread an even down-force across an entire surface of the document and improve the contact of the document against the platen.

## Description

### TECHNICAL FIELD

Embodiments are generally related to platens utilized with imaging devices such as copiers, scanners, and multi-function devices. Embodiments also relate to a highly conformable platen cushion for improving document contact with a platen of an imaging device. Embodiments additionally relate to a pneumatic actuator that assists in improving document contact with a platen of an imaging device.

### BACKGROUND

Copiers, scanners, and like devices (hereinafter referred to as imaging devices) make duplicate images from original document images by first exposing the original document image with a light source or other optical system at an imaging station. The original document is placed on a glass platen at the imaging or exposure station of the device for the exposure step. The device is provided with a platen cover that is preferably brought over the surface of the original document and glass platen at least during the exposure step.

Scanners and document handlers associated with image devices typically use foam backed or rigid platen covers to hold a document against the scanner platen glass. Good image quality may depend on how flat the document is relative to the platen glass, and may be highly impacted by the parallelism of document handler to scanner platen glass alignment as well as the force of platen cushion against the document glass. Rigid platen cushions must be completely flat and parallel to the glass surface to provide even pressure across the document, which is not easily achieved, typical foam cushions go some way to address the conformity, but again may not be parallel or provide sufficient conformity to apply even pressure to the document to ensure it is flat against the platen glass.

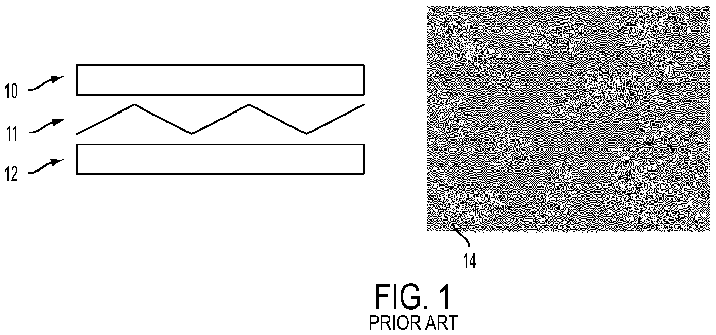

FIG. 1 illustrates a prior art foam backed, or ridge, platen cushion 10 with a document 11 to be scanned or copied as shown flat on a glass platen 12 (i.e., the "glass"). Keeping the document flat against the glass 12 is critical, especially for CIS modules with short depths of focus and illumination. As shown in FIG. 1, image 14 is a scan of an undulating surface with approximately 0.5 mm depressions which could be expected from the use of the conventional foam backed, or rigid, platen cushion 10 which does not hold documents 11 flat against the platen glass 12. Ideally, a system should be robust to such variations or hold the document flat.

### BRIEF SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the disclosed embodiments to provide for an improved platen cover configuration for an imaging device such as a copier or scanner.

It is another aspect of the disclosed embodiments to provide for a high conformable platen cushion for improving document contact with a platen glass of an imaging device.

The aforementioned aspects and other objectives and advantages can now be achieved as described herein. In an example embodiment, a platen cushion apparatus includes a platen cushion configured to conform to both a document and a platen of a scanner so as to maintain the document against the platen independent of a scanner to document handler alignment, while also maximizing contact with the document and spread an even down-force across an entire surface of the document and improve the contact of the document against the platen.

In another example embodiment, a sealed plastic (e.g., vinyl or other types of encasing materials) pillow can be attached to a bellow type element. The bellows can be positioned near a hinge pivot and as a document handler is closed the bellows is compressed and inflates the platen pillow. The platen pillow can be configured from a rigid facing sheet that ensures pressure is provided into the tight corners of the platen, and a thinner flexible plastic sheet that backs up the rigid element atop to create a pillow. Closing the document handler can automatically activate the bellows and provide even pressure across the platen surface.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a prior art foam backed, or ridge, platen cushion;
FIG. 2 illustrates top and bottom views of alternative embodiments of a platen cushion, in accordance with varying embodiments;
FIG. 3 illustrates a schematic diagram depicting a system composed of a document handler and a platen scanner having a standard foam backed cushion with respect to a system employing instead a highly conformable cushion, in accordance with an example embodiment;
FIG. 4 illustrates an example of a platen cushion that does not evenly hold the page against the glass to demonstrate the illumination falling off as the page comes away from the platen glass;
FIG. 5 illustrates replacement of the original platen cushion with the gel cover, wherein the gel balls flow across the surface to evenly hold the page against the glass, but unlike a liquid they do not leak out, in accordance with an example embodiment; and
FIGS. 6, 7, and 8 illustrate an imaging device and a platen scanner with respect to a document handler and a bellows apparatus, in accordance with an example embodiment.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein do not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms, such as "and," "or," or "and/or" as used herein may include a variety of meanings that may depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Imaging devices, for example, including copiers (photocopiers), scanners, and the like, are well known and conventional in the art, and thus the operation, components, and functions thereof need not be, and are not, explained in detail herein. One example of an imaging device is an MFD (Multi Function Device) or MFP (Multi-Function Product/Printer/Peripheral) which is an office machine that incorporates the functionality of multiple devices in one, so as to offer a smaller footprint in a home or small business setting, or to provide centralized document management/distribution/production in a large office setting. A typical MFP or MFD can combine some or all of the following devices: e-mail, fax, photocopier, printer, and scanner.

In the art of electrophotography, for example, such as used in conventional copiers, a photoreceptor (electrophotographic plate, drum, belt, or the like) has an electrostatic latent image of an image from an original document formed thereon by first uniformly electrostatically charging the imaging surface of the photoreceptor. The photoreceptor is then exposed to a pattern of activating electromagnetic radiation such as light received from an original document (i.e., light reflected from the original document as exposed at the exposure station), which selectively dissipates the charge in the illuminated areas of the photoreceptor while leaving behind an electrostatic latent image in the non-illuminated area corresponding to the image of the original document. This electrostatic latent image may then be developed at one or more developing stations which apply a pre-selected colorant, for example, colored toner particles, to form a visible image on the surface of the photoreceptor. The resulting visible toner image is then transferred at a transfer station directly or indirectly (for example, through the use of an intermediate transfer member) to a suitable image-receiving member such as paper.

In scanners, a charge couple device (CCD) or other full-width imaging array, e.g., Contact Image Sensor (CIS), receives the light reflected from the original document at the exposure station. The imaging array is in turn conventionally electronically connected to conventional, well known, electronic digital image processing systems, devices, or chips, pre-programmed, or programmed with software, which may collectively be identified as the image processor. As is well known, the resultant electronic digital images may then be forwarded on for image compression or other processing and storage, and/or screen displays, and/or controlling a laser printer for digital printing or copying (e.g., using a photoreceptor as above), locally or at remote sites, and/or conversion to lower resolution facsimile page images for facsimile transmission, as variously discussed in the above cited and other patents, and known from commercial products. The disclosed systems may be utilized in the context of, for example, stand-alone scanners, or combined or integrated with multi-function apparatus providing various of such functions or outputs.

Imaging devices such as scanners and copiers employ an exposure station where the image of an original document to be replicated for storage, printing, copying, etc., is exposed to a light source or other optical system (including electromagnetic radiation sources) so as to register a copy of the image of the original document. In copiers, for example, the image registered within the light from the light source is used in forming the electrostatic latent image upon the surface of the photoreceptor as discussed above. The exposure station can include a platen having a surface upon which an original document may be placed, a light source located on a side of the platen opposite the surface upon which the original document may be placed, and a platen cover adjacent the surface of the platen upon which the original document may be placed.

The term "exposure station" as used herein is intended to refer to that portion of a device where a light source (optical system) that is used in exposing the image of an original document for image replication is located, i.e., the light source from which the reflected light from the original document is used in replication of the image. The exposure station will also include a platen, for example, a glass platen, upon which an original document is placed (with the surface of the original document containing the original image to be replicated facing or contacting the platen surface). This definition thus excludes devices such as density detection devices that do not include platens and whose light source is not used in replication of the image (the light source only being used in a density determination, not replication or duplication of the original image itself).

The light source may be any conventional light source known to be used in the art without limitation. As but one example, an LED array may be used as the light source. The platen can be configured from a clear material that the light from the light source can readily pass through. While a clear plastic may be used, the platen is most preferably comprised of glass (i.e., a glass platen).

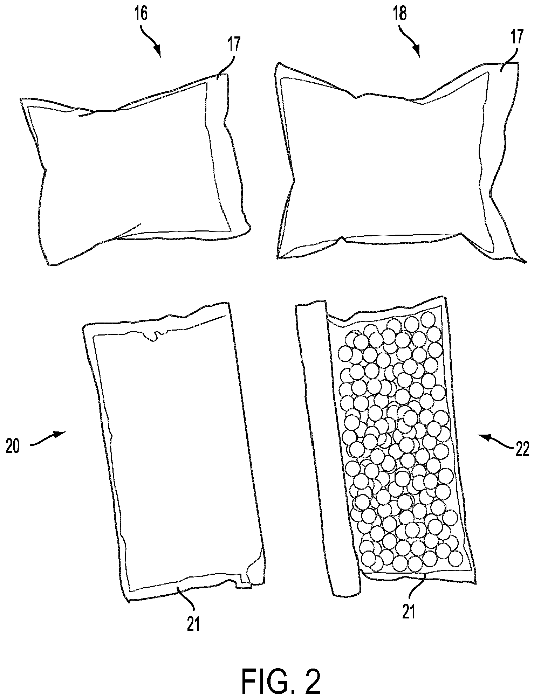

FIG. 2 illustrates top and bottom views of alternative embodiments of a platen cushion, in accordance with varying embodiments. A top view 16 and a bottom view 18 of a platen cushion 17 filled with gas (e.g., air) is shown above a top view 20 and a bottom view 22 of a platen cushion filled with beads. In both cases, a thin membrane can be employed, which is filled with highly conformable media. The side of the cushion that will be in contact with the document/platen glass is uniform in color typically white, but other backing colors are possible dependent on the application.

To improve the contact of a document against a scanner glass, the embodiments shown in FIG. 2 offer a highly conformable platen cushion that can mimic the natural shape of the platen glass and document, applying a downward force across the entire document surface, and ensuring that the imaged surface of the document remains held flat across its entire surface. This requires two attributes. First, the cushion area must conform to the shape beneath, so a thin plastic or rubberized white (or other suitable uniform reflectance) membrane can be utilized. Second, even pressure should be applied, which is achieved by the conformal filling. It is important to not overfill the cushion, as this will reduce its ability to conform to the shape of the document.

In some example embodiments, the platen cushion can be configured as a bag filled with a highly conformable material (e.g., gas, liquid, gel, beads, or foam). Beads such as those contained in the cushion 21 have some of the characteristics of liquid or gas, but are less likely to leak. Gel or foam is a preferred embodiment, because these features are more robust to any leaks in the enclosing substrate.

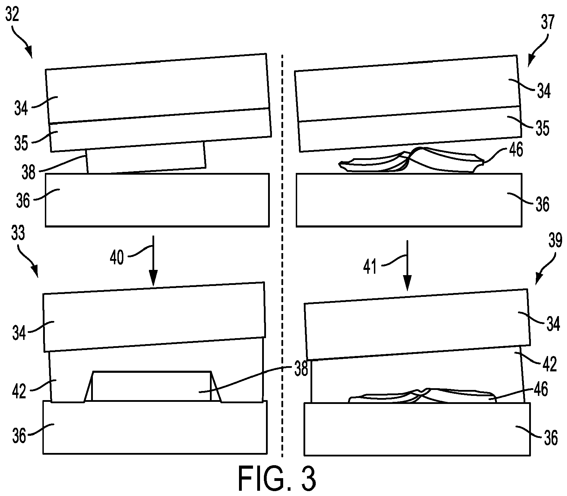

FIG. 3 illustrates a schematic diagram depicting a system 32 composed of a document handler 34 and a platen scanner 36 having a standard foam backed cushion 35 with respect to a system 33 employing instead a highly conformable cushion 42, in accordance with an example embodiment. That is, both systems 32 and 33 include a document handler 34 and a platen scanner 36 with respect to a document 38 to be scanned or copied. Arrow 40 indicates that system 32 is modified so that it now functions as system 33 with the conformable cushion 42 instead of the foam cushion 35.

FIG. 3 also illustrates a system 37 that also includes the document handler 34, the foam cushion 35, and the platen scanner 36. Instead of a document such as document 38 subject to scanning, the configuration of system 37 depicts a book 46 subject to scanning and located on the platen scanner 36. Arrow 41 indicates that system 37 can be modified to function as a system 39 that also includes the document handler 34 and the platen scanner 36. However, the conformable cushion 42 is used instead of the foam cushion 35 with respect to the book 46 to be scanned.

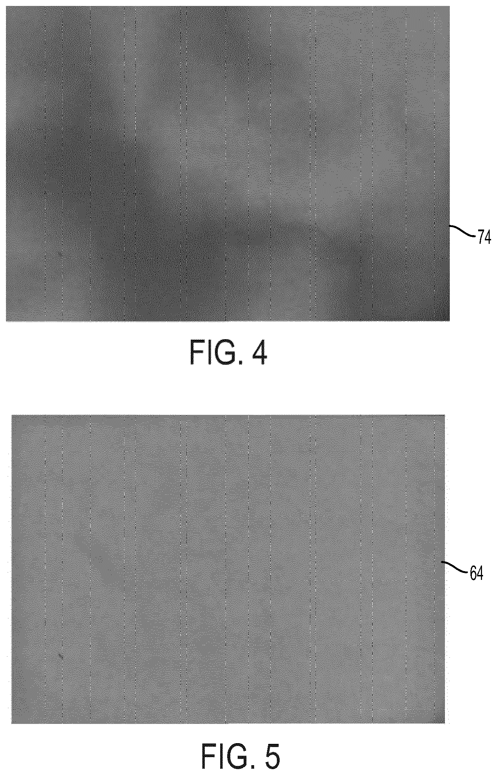

FIG. 4 illustrates an example of a document 74 scanned with a platen cushion that does not evenly hold the page against the glass to demonstrate the illumination falling off as the page comes away from the platen glass. FIG. 5 illustrates document 64 scanned with a replacement of the original platen cushion with the gel cover, wherein the gel balls flow across the surface to evenly hold the page against the glass, but unlike a liquid they do not leak out, in accordance with an example embodiment.

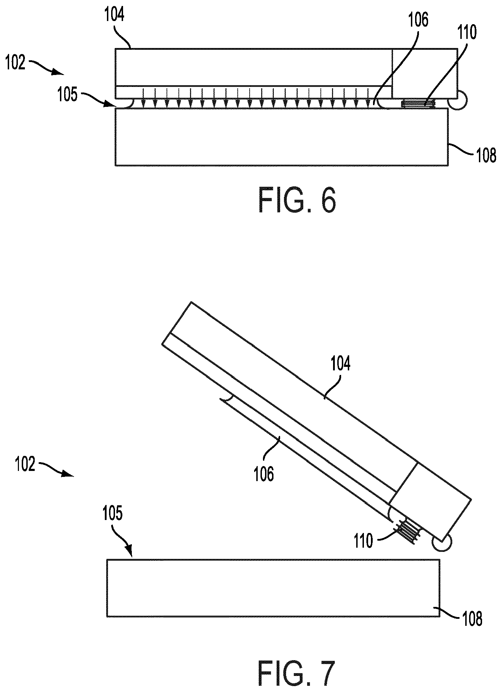

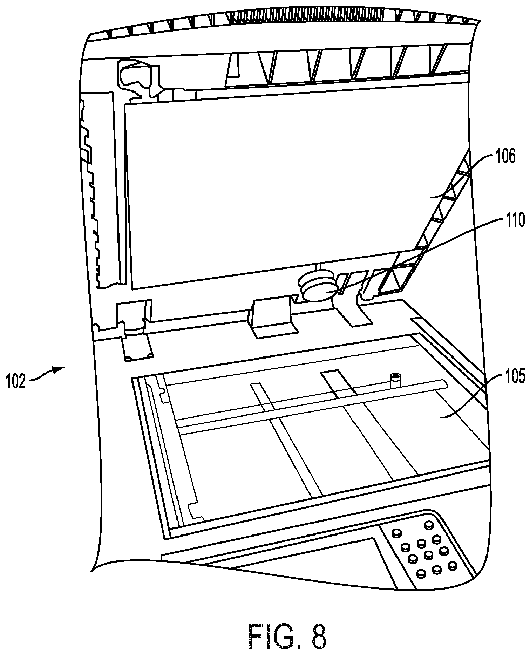

FIGS. 6, 7, and 8 illustrate an imaging device 102 having a platen scanner 108 with respect to a document handler 104 and a bellows apparatus 110, in accordance with an example embodiment. The bellows apparatus 110 can be configured as bellows (e.g., plastic bellows) that provides pneumatic or hydraulic pressure evenly across the platen pillow 106. The bellows 110 is linked to the platen pillow 106. The platen pillow 106 can be configured with a thick platen plate backed up by a thin flexible pillow. The glass platen 105 of the scanner is located on the face of the scanner 108. FIG. 6 illustrates the imaging device 102 having the platen scanner 108 positioned with respect to the document handler 104 in a closed position. FIG. 7 illustrates a side view of the imaging device 102 including the platen scanner 108 with respect to the document handler 104 in an open position. FIG. 8, on the other hand, illustrates a perspective pictorial view of the imaging device 102 and the bellows apparatus 110 with respect to the platen pillow 106 in an open position above the glass platen 105.

Note that solutions use foam pads faced with plastic sheet or an articulated rigid plate to put even pressure across the document when on the platen surface. This can be problematic when the handler itself is twisted and cannot provide even pressure. The configuration depicted in FIGS. 6, 7, and 8 can utilize the sealed pillow 106 attached to the bellow type element or apparatus 110. The bellows 110 are generally positioned near the hinge pivot and as the handler is closed the bellows is compresses and inflates the platen pillow, thereby providing an even pressure across the surface of the platen 105. The platen pillow 106 can be configured from a rigid facing sheet that ensures pressure is provided into the tight corners of the platen 105, and a thinner flexible sheet that backs up the rigid element top create the pillow 106.

Based on the foregoing, it can be appreciated that a number of embodiments are disclosed herein. For example, in one embodiment, a platen cushion apparatus can be configured which includes a platen cushion that conforms to both a document and a platen of a scanner so as to maintain said document against said platen independent of a scanner to document handler alignment, while also maximizing a contact with said document and spread an even down-force across an entire surface of said document and improve said contact of said document against said platen.

In some example embodiments, the aforementioned platen cushion can be filled with gas. In another example embodiment, the platen cushion can be filled with a gel. In still another example embodiment, the platen cushion can be filled with a plurality of beads. In yet another example embodiment, the platen cushion can be filled with foam.

In some example embodiments, the platen can be a glass platen. In another example embodiment, the platen cushion can include a thin plastic membrane. In still another example embodiment, the platen cushion can include a rubberized white membrane.

In another example embodiment, an apparatus for providing even platen pressure can be implemented, which includes an actuator located near a pivot point with respect to a document handler and a scanner platen, wherein as said document handler is closed said actuator is compressed and inflates a platen pillow. In an example embodiment, the actuator can be implemented as a bellows. In still another example embodiment, the platen pillow can include a rigid facing sheet that ensures pressure is provided into corners of said scanner platen, and the platen pillow can additionally include a thin flexible sheet. In yet another example embodiment, closing of the document handler can automatically activate said bellows while providing even pressure across a surface of said scanner platen. In some example embodiments, the bellows can be a pneumatic bellows or a hydraulic bellows.

In another example embodiment, a method of implementing a platen cushion apparatus for a scanner can be implemented. Such a method can include the step or operation of configuring a platen cushion to conform to both a document and a platen of a scanner so as to maintain the document against the platen independent of a scanner to document handler alignment, while also maximizing a contact with the document and spread an even down-force across an entire surface of the document and improve the contact of the document against the platen.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A platen cushion apparatus, comprising:
a platen cushion configured to conform to both a document and a platen of a scanner so as to maintain said document against said platen independent of a scanner to document handler alignment, while also maximizing a contact with said document and spread an even down-force across an entire surface of said document and improve said contact of said document against said platen.

2. The apparatus of claim 1 wherein said platen cushion is filled with gas.

3. The apparatus of claim 1 wherein said platen cushion is filled with a gel.

4. The apparatus of claim 1 wherein said platen cushion is filled with a plurality of beads.

5. An apparatus for providing even platen pressure, comprising:
an actuator located near a pivot point with respect to a document handler and a scanner platen, wherein as said document handler is closed said actuator is compressed and inflates a platen pillow.

6. The apparatus of claim 5 wherein said actuator comprises a bellows.

7. The apparatus of claim 5 wherein said platen pillow comprises a rigid facing sheet that ensures pressure is provided into corners of said scanner platen, and wherein said platen pillow additionally comprises a thin flexible sheet.

8. A method of implementing a platen cushion apparatus for a scanner, comprising:
configuring a platen cushion to conform to both a document and a platen of a scanner so as to maintain said document against said platen independent of a scanner to document handler alignment, while also maximizing a contact with said document and spread an even down-force across an entire surface of said document and improve said contact of said document against said platen.

9. The method of claim 8 wherein said platen cushion is filled with gas.

10. The method of claim 8 wherein said platen cushion is filled with a gel.
